# EUROPÄISCHE PATENTSCHRIFT

(11) **EP 2 644 314 B1**
(45) Veröffentlichungstag und Bekanntmachung des Hinweises auf die Patenterteilung: **20.03.2019**
(21) Anmeldenummer: 13161420.8
(22) Anmeldetag: 27.03.2013
(51) Int. Cl.: B23K 37/04, B23K 37/047, B23Q 3/06, B25B 1/24, B23K 26/20, B25B 5/12

(54) **Spannmodul für eine Spannvorrichtung sowie Spannvorrichtung mit solchem Modul und einem Positioniermodul zum Spannen von Blechbauteilen**
Clamping module for a clamping device and clamping device with such module and a positioning module for clamping sheet metal plate components
Module de serrage pour un dispositif de serrage et dispositif de serrage avec de un tel module et un module de positionnement pour le serrage d'éléments de construction en tôle

(30) Priorität: 30.03.2012 DE 102012102820
(43) Veröffentlichungstag der Anmeldung: 02.10.2013
(73) Patentinhaber: TRUMPF Laser- und Systemtechnik GmbH, 71254 Ditzingen (DE)
(72) Erfinder: Haag, Valentin, 70563 Stuttgart (DE); Merk, Maximilian, 71272 Renningen (DE)
(74) Vertreter: Mammel und Maser

(56) Entgegenhaltungen:
- DE-U1-202007 017 274
- FR-A1- 2 677 570
- JP-A- H04 127 996
- JP-A- 2001 287 090
- JP-A- 2001 328 042
- US-A- 3 988 865
- US-A- 5 674 420
- DATABASE WPI Week 198244 Thomson Scientific, London, GB; AN 1982-94454E XP002706406, -& SU 893 485 A1 (V. M. PUSHIN) 30. Dezember 1981 (1981-12-30)

## Beschreibung

Die Erfindung betrifft ein Spannmodul für eine Spannvorrichtung zum Spannen von Blechbauteilen gemäß dem Oberbegriff des Anspruchs 1 (siehe, z.B., US5,674,420 A). Die Erfindung betrifft des Weiteren eine Spannvorrichtung, die ein solches Spannmodul aufweist, siehe Anspruch 6.

Aus der DE 100 29 293 A1 ist eine Schweißvorrichtung zur Verschweißung mehrerer Blechplatinen zu einen Tailored Blank bekannt. Eine solche Schweißvorrichtung umfasst einen Auflagerahmen, auf welchem die Blechplatinen aufgelegt werden. Die einander zugeordneten Stirnkanten bilden die Schweißkanten, die durch einen Schweißvorgang stoffschlüssig miteinander verbunden werden. Hierzu ist oberhalb des Auflagerahmens eine Reihe von Spannvorrichtungen nebeneinander angeordnet, welche mit einem Druckzylinder eine Wegerzeugung zum Überführen des jeweiligen Spannbackens in eine Spannposition erzeugen. Durch die Vielzahl der nebeneinander angeordneten kreisförmigen Spannbacken wird eine gegebenenfalls vorhandene Welligkeit der Blechplatine plattgedrückt, so dass die Schweißkanten eben zur Anlage kommen. Anschließend wird mit einer Schweißvorrichtung eine Schweißnaht gezogen, um die Blechplatinen miteinander zu verbinden.

Aus der DE 10 2006 035 517 B3 geht eine Spanneinrichtung zum Spannen von Blechplatinen in einer Schweißvorrichtung hervor. Diese Spanneinrichtung umfasst zumindest einen verstellbaren Spannhebel, der über ein Druckstück gegen die Blechplatine drückt. Zwischen dem Druckstück und dem Spannhebel ist ein Ausgleichsfederelement geschaltet, das das Druckstück elastisch am Spannhebel lagert.

Diese Schweißvorrichtungen ermöglichen nur das Verbinden von Blechplatinen, also ebenen Blechteilen. Weitere Blechbauteile mit einer abweichenden Form von einer ebenen Tafelform können nicht miteinander verschweißt werden. Darüber hinaus ist der konstruktive Aufwand einer solchen Vorrichtung kostenintensiv.

Aus der US 5,674,420 A ist eine Spannvorrichtung für eine Schweißmaschine bekannt, bei welcher an einem Querträger ein Hebel über eine Gelenkverbindung befestigt ist, welche durch die Luftschläuche um die Gelenkachse schwenkbar ist. Zwischen dem Hebelarm und der Spannbacke ist ein Federelement angeordnet. Dieses ist in Spannrichtung nachgiebig, jedoch in einer Richtung quer dazu steif aufgrund des rechteckförmigen Querschnitts des Federelementes. Bei dieser Spannvorrichtung ist eine Vielzahl von Spannbacken jeweils einzeln über jeweils ein Federelement aufgenommen und zum Werkstück positionierbar.

Die JP 04 127996 offenbart eine Spannvorrichtung für eine Schweißmaschine, bei welcher an jedem einzeln über einen Luftschlauch betätigbaren Hebelarm ein Spannbacken angeordnet ist. Somit ist jede Spannbacke über einen die Spannbacke aufnehmenden Hebelarm ansteuerbar.

Aus der JP 2001 287090 ist ein Positioniermodul für eine Schweißmaschine bekannt, bei welcher ein Anschlagelement um eine feststehende Drehachse mittels eines Hubzylinders verfahrbar ist.

Der Erfindung liegt die Aufgabe zugrunde, ein Spannmodul für eine Spannvorrichtung sowie eine modular aufgebaute Spannvorrichtung für einen Schweißvorgang vorzuschlagen, wodurch eine hohe Flexibilität im Einsatz unabhängig von der Stoßgeometrie der Fügekante ermöglicht ist, um eine Schweißnaht an zwei einander zugeordneten Schweißkanten herzustellen und darüber hinaus eine hohe Wiederholgenauigkeit und geringe Rüstzeiten gegeben sind.

Ein Spannmodul gemäß der Erfindung ist im Anspruch 1 definiert. Somit kann durch das Spannmodul eine Spannkraft erzeugt werden, die im Auslenkungsbereich nahezu gleichbleibend ist. Gleichzeitig kann sich die zumindest eine Spannbacke auf dem Bauteil anschmiegen, das heißt, dass eine nahezu vollständige oder vollflächige Anlage der zumindest einen Spannbacke auf dem Bauteil gegeben ist. Des Weiteren wird dadurch ermöglicht, für den Fall, dass beim Abspannen des Bauteils ein Verrutschen des Bauteils auf einen Aufnahmedorn einer Spannvorrichtung erfolgen sollte, gegen den die Spannkraft wirkt, dieses Verrutschen nur in Richtung einer Fügestelle erfolgt, um das Entstehen eines Spaltes zwischen den zwei zuzuordnenden Blechbauteilen zu verhindern. Die flächige Auflage der Spannbacke dient auch der Wärmeübertragung in Form von Wärmeleitung aus dem Bauteil in die Spannbacke. Unabhängig davon ermöglichen die zumindest zwei oder mehrere Festkörpergelenke eine nahezu unveränderte Spannkraft entlang der Schweißnaht unabhängig von den zu spannenden Blechdicken des Bauteils.

Zwischen mit Abstand zueinander angeordneten Hebelgetrieben kann das Wegerzeugungselement positioniert sein, welches die Hebelgetriebe betätigt, die an der zumindest einen Spannbacke angreifen. Durch die doppelte Ausbildung des Hebelgetriebes kann die Krafteinleitung, insbesondere auf nur einer gemeinsamen Spannbacke, entfernt von einem Mittelpunkt der Spannbacke erfolgen, wodurch eine gleichmäßigere Einleitung der Spannkraft auf dem Blechteil gegeben sein kann. Darüber hinaus wird über die Spannbacke eine linienförmige bzw. flächige Krafteinleitung ermöglicht. Das Wegerzeugungselement kann auch direkt am Spannhebel angreifen.

Die zumindest eine Spannbacke ist bevorzugt austauschbar, insbesondere mittels einer Schnapp, Spann-, Rast- oder Klemmverbindung, an dem zumindest einen Hebelgetriebe angeordnet. Durch die schnelle Austauschbarkeit der Spannbacke am Spannmodul kann eine individuelle Anpassung in der Form der Spannbacke an das zu klemmende Bauteil erfolgen, beispielsweise in Anpassung an die Backenlänge oder durch Freischneiden von Konturen in der Spannbacke bei nicht ebenen Bauteilkonturen, wie beispielsweise Schweißbolzen oder dergleichen. Durch die Schnapp, Spann-, Rast- oder Klemmverbindung ist die Spannbacke nicht nur austauschbar, sondern auch im Abstand zur Fügekante einstellbar.

Das Festkörpergelenk ist bevorzugt einstückig an einem Spannhebel des Hebelgetriebes angeordnet. Dadurch kann eine bauteilreduzierte Ausgestaltung ermöglicht sein.

Alternativ kann das Festkörperelement über eine Schnapp-, Spann-, Rast- oder Klemmverbindung an einem Spannhebel in Analogie zu einer solchen an der Spannbacke angeordneten Verbindung angeordnet werden. Dadurch können in Abhängigkeit der Anwendungsfälle Festkörpergelenke mit verschiedenen Steifigkeiten und/oder eines Spannhubes in Abhängigkeit der aufzubringenden Spannkraft ausgewählt und vorgesehen sein.

An den Hebelgetrieben und/oder an dem Wegerzeugungselement kann ein Rückstellelement angreifen, welches in einem nicht beaufschlagten Zustand des Wegerzeugungselementes die Hebelgetriebe in eine Ausgangsposition zurücksetzt. Zu dieser Ausgangsposition ist der Spannbacken gegenüber dem Aufnahmedorn abgehoben, so dass eine einfache Entnahme des gefügten Bauteils und ein Bestücken mit einem weiteren Blechbauteil ermöglicht sind. Des Weiteren ist lediglich zur Erzeugung einer Hubbewegung für einen Spannvorgang eine Energiezuführung zum Wegerzeugungselement erforderlich. Das Rückstellelement kann im Wegerzeugungselement integriert oder davon unabhängig sein.

Die Spannbacke weist bevorzugt als Spannbewegung für einen Spannhub einen maximalen Hub von weniger als 16 mm auf. Dabei sollte der Spannhub bevorzugt unterhalb der kritischen Finger-Quetschgrenze liegen, um ein Bauteil während des Spannens mit den Händen festhalten zu können.

Das Gehäuse des Spannmoduls umfasst einen rechten und linken Wandabschnitt, in welchen jeweils eine Positionieröffnung zur aufsteckbaren Anordnung an einem Spannbalken einer Spannvorrichtung vorgesehen ist, die miteinander fluchten, wobei das Hebelgetriebe zumindest an einer Außenseite der Positionieröffnung entlang geführt ist. Dabei ist auch ein einteiliges Gehäuse denkbar. Durch diesen Aufbau des Gehäuses kann zum einen ein leichtes Anordnen des Spannmoduls auf den Spannbalken durch ein Aufstecken ermöglicht werden, da dieses Spannmodul dann formschlüssig zum Spannbalken gehalten ist. Zum anderen können große Hebelkräfte über das Hebelgetriebe aufgebaut werden, ohne dass diese die weiteren Funktionen des Spannmoduls beeinträchtigen. Entlang der Fügekante kann zudem das Spann- und/oder Positioniermodul beliebig angeordnet werden. Es ist ein günstiges Querschnittsprofil des Spannbalkens möglich, das eine hohe Torsions- und Biegesteifigkeit aufweist.

Eine Spannvorrichtung mit dem Spannmodul gemäß der Erfindung ist im Anspruch 6 definiert, bei der an einer Grundplatte ein Aufnahmedorn und zumindest zwei Spannbalken frei auskragend anordenbar und die zumindest zwei Spannbalken und der Aufnahmedorn in einer dreieckförmigen Anordnung zueinander positioniert sind, wobei an jedem Spannbalken zumindest ein Spannmodul anordenbar und der zumindest eine Spannbacken des daran angeordneten Spannmoduls dem Aufnahmedorn zum Fixieren eines Blechbauteils zugeordnet ist. Eine solche Spannvorrichtung ermöglicht die Aufnahme einer Vielzahl voneinander abweichenden Blechbauteilen, um deren lineare Schweißkanten der einander zugeordneten Abschnitte eines oder mehrerer Bauteile miteinander zu verschweißen. Die Spannvorrichtung ist konstruktiv im Aufbau einfach durch die Spannbalken und den Aufnahmedorn gebildet, welche unterschiedliche Größen, Formen oder Längen aufweisen können, um eine flexible und kostengünstige als auch leichte Umrüstung auf den nachfolgenden Schweißvorgang zu ermöglichen. Eine solche Spannvorrichtung stellt eine leicht einstellbare Schweißvorrichtung für den Modell- und Prototypenbau sowie für die Einzelteil- oder Kleinserienfertigung, gegebenenfalls auch Serienfertigung, dar. Dadurch lässt sich ein weites Spektrum unterschiedlicher Blechbauteile mit unterschiedlichen Stoßgeometrien und Nahtarten miteinander verschweißen. Die Nutzung der Spannvorrichtung ist unabhängig vom jeweiligen Schweißverfahren, jedoch aufgrund der hohen Positionier- und Wiederholgenauigkeit gerade für das Laserschweißen geeignet.

Diese Spannvorrichtung weist des Weiteren den Vorteil auf, dass diese beispielsweise in einer Schweißzelle, zum Beispiel TruLaser Robot 5020 der Anmelderin, stationär oder an einer ungenutzten Stelle im Arbeitsraum als auch unabhängig von vorhandenen Bauteilpositionierern aufgestellt werden kann. Somit können durch entsprechend abrufbare Unterprogramme zu einer parallel laufenden Serienfertigung Bauteile mit der Spannvorrichtung gespannt und geschweißt werden, ohne dabei die sich in der Serienfertigung befindenden Teile oder Schweißbaugruppen von dem gerade benutzten Bauteilpositionierer herunter nehmen zu müssen.

Die Spannmodule können spiegelbildlich zum Aufnahmedorn an den Spannbalken angeordnet sein, so dass die Spannbacken der Spannmodule unter Bildung eines Spaltes zumindest zwei einander gegenüberliegende Schweißkanten von Blechteilen mit einer Fügestelle zum Aufnahmedorn fixieren. Durch die dreieckförmige Anordnung der Spannbalken und des Aufnahmedornes einerseits sowie der spiegelbildlichen Anordnung der Spannmodule an den Spannbalken andererseits ist eine optimale Klemmkraft zum Fixieren der Blechbauteile auf dem Aufnahmedorn ermöglicht sowie eine gute Zugänglichkeit zu den Schweißkanten des oder der Blechbauteile zur Herstellung einer Schweißnaht gegeben.

An dem Spannbalken können ein oder mehrere Spannmodule anordenbar sein, die entlang des Spannbalkens verschiebbar aufgenommen sind. Dadurch ist zum einen das Spannmodul entlang des Spannbalkens auf die nachfolgende Spannposition einstellbar. Zum anderen lassen sich auch bei mehreren auf einem Spannbalken angeordneten Spannmodulen Kurzrohre erzeugen, die beispielsweise aus zwei oder mehreren Blechteilen hergestellt werden.

Das Gehäuse des Spannmoduls kann formschlüssig und/oder kraftschlüssig mit dem Spannbalken verbunden sein. Insbesondere die formschlüssige Anordnung des Spannmoduls am Spannbalken ermöglicht ein einfaches Handling, indem das Spannmodul auf den Spannbalken aufgeschoben wird und durch ein nachfolgendes Festklemmen das Blechbauteil selbständig eine Lagefixierung des Spannmoduls zum Spannbalken erfolgt. Alternativ kann das Spannmodul auf dem Spannbalken aufgesetzt und durch eine form- und/oder kraftschlüssige Verbindung, insbesondere einen Spannverschluss, fixiert werden.

Der Spannbalken weist vorteilhafterweise eine Querschnittsgeometrie auf, welche mit einer am Außenumfang komplementären Öffnung im Gehäuse des Spannmoduls eine verdrehsichere Aufnahme des Spannmoduls bildet. Beispielsweise weist der Spannbalken einen quadratischen oder rechteckförmigen oder auch mehreckförmigen Querschnitt auf, wobei die Öffnung im Gehäuse des Spannmoduls eine Öffnung entsprechend dem Querschnitt des Spannbalkens umfasst. Nach dem Aufstecken oder Aufschieben des Spannmoduls auf den Spannbalken wird eine Verdrehsicherung geschaffen. Dadurch ist eine einfache Handhabung gegeben.

An den freien Enden der Spannbalken und des Aufnahmedorns kann ein Bügel oder eine Halteeinrichtung anordenbar sein, der den Abstand der Spannbalken und des Aufnahmedorns in deren unbelastetem Zustand zueinander fixiert. Diese Halteeinrichtung ermöglicht, dass die über die Spannmodule aufgebrachte Klemmkraft zur Fixierung der Blechbauteile auch beibehalten wird, da ansonsten mit zunehmender frei auskragender Länge der Spannbalken und des Aufnahmedornes eine zunehmende Auslenkung beziehungsweise Biegung gegeben wäre. Beispielsweise kann an zwei Enden der Halteeinrichtung ein Steckabschnitt vorgesehen sein, der in den Querschnitt des Spannbalkens eingesetzt wird oder an dem Endabschnitt angreift, wobei in einem mittleren Abschnitt der Halteeinrichtung ein weiteres Befestigungselement vorgesehen ist, das an dem Aufnahmedorn angreift oder einsetzbar ist.

Der Aufnahmedorn und/oder der zumindest eine Spannbalken sind bevorzugt entlang der Ebene der Grundplatte verfahrbar aufgenommen. Dies ermöglicht zum einen ein Voreinstellen auf die zu spannende Blechdicke. Zum anderen kann bei Blechbauteilen, welche zumindest eine Abkantung aufweisen, zunächst ein Einhängen auf den Aufnahmedorn erfolgen, bevor dieser anschließend in eine Bearbeitungs- oder Spannposition übergeführt wird, in der die Spannbacken des Spannmoduls das Blechbauteil zum Aufnahmedorn festklemmen können.

Zur exakten Positionierung der Spannbacken und des Aufnahmedorns zur Grundplatte sowie zum Aufbringen der nötigen Steifigkeit auf engem Raum kann eine Zentriereinrichtung zwischen der Grundplatte und dem Aufnahmedorn und/oder dem jeweiligen Spannbalken vorgesehen sein. Diese Zentriereinrichtung weist bevorzugt Zentrierblöcke auf, welche zur Funktion haben, dass die auftretenden Spannkräfte und daraus resultierende Biegemomente in die Grundplatte eingeleitet werden, um dadurch die Linearführung (Rollenumlaufeinheit) zu entlasten. Dadurch kann die nötige Steifigkeit und Position des Aufnahmedorns auf engem Raum erreicht werden. Ebenso wirkt sich dadurch auch die Durchbiegung des frei auskragenden Aufnahmedorns und der frei auskragenden Spannbalken, die jeweils links und rechts der Fügestelle sitzen und auf dem die Spannmodule befestigt sind, unmerklich auf die Spannkraft aus, mit der das Blechbauteil gehalten wird.

An dem Spannmodul oder dem Spannbalken kann zumindest ein Positioniermodul anordenbar sein, welches entlang der Längsachse des Spannbalkens verfahrbar ist. Dadurch können die Blechbauteile in einer vorbestimmten Arbeitsposition auf dem Aufnahmedorn zur Bildung von Stößen für die zu bildende Schweißnaht fixiert werden.

Des Weiteren kann an dem Spannbalken oder dem Aufnahmedorn ein Anschlagelement vorgesehen sein. Dieses ist bevorzugt entlang der Längsachse des Spannbalkens oder des Aufnahmedorns verfahrbar und bildet einen Z-Anschlag, also einen Anschlag in Z-Richtung. Dadurch kann die Eintauchtiefe des oder der Blechbauteile festgelegt werden.

An dem Aufnahmedorn ist bevorzugt zumindest ein Hilfsspannelement zur Aufnahme von zumindest einem Blechbauteil befestigbar. Solche Hilfsspannelemente können als Adapterelemente auf dem Aufnahmedorn aufbringbar sein, um eine schnelle und einfache Anpassung an die nachfolgende Schweißaufgabe beziehungsweise Bauteilgeometrie, insbesondere bei Umkantungen, und/oder Nahtgeometrie zu ermöglichen. Dabei können die Hilfsspannelemente beliebige Formen annehmen oder in den Aufnahmedorn integriert sein.

Der Aufnahmedorn kann einen zur Schweißkante zugeordneten Kanal zum Zuführen eines Schweißgases oder eines Kühlmediums aufweisen. Durch das Zuführen eines Gases, insbesondere Schutzgases, für den Schweißprozess kann die Qualität der Schweißnaht durch eine verringerte Oxidbildung in der Nahtoberraupe verbessert werden. Dies macht die nachträgliche Behandlung der Schweißnahtoberfläche zur Entfernung der Nahtschicht überflüssig. Darüber hinaus kann eine schnelle Abkühlung der Bauteile und zumindest des Aufnahmedornes ermöglicht sein.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht eines erfindungsgemäßen Spannmoduls mit einer abgenommenen vorderen Gehäusewand,
Figur 2 eine weitere perspektivische Ansicht des Spannmoduls gemäß Figur 1,
Figur 3 eine perspektivische Ansicht einer alternativen Ausführungsform eines Spannmoduls zu Figur 1,
Figur 4 eine perspektivische Seitenansicht einer erfindungsgemäßen Spannvorrichtung mit Spannmodulen gemäß Figur 1,
Figur 5 eine perspektivische Ansicht der Spannvorrichtung gemäß Figur 4 mit einem daran befestigten Blechbauteil,
Figur 6 eine schematische Ansicht der Spannvorrichtung von oben auf Figur 5,
Figur 7 einen schematischen Teilschnitt einer Spannposition der Spannmodule entlang der Linie VI-VI in Figur 6,
Figuren 8a und 8b eine schematische Detaildarstellung des Spannmoduls zur Wirkungsweise eines Festkörpergelenkes des Spannmoduls gemäß Figur 1,
Figur 9 eine schematische Übersicht über eine Abfolge von Arbeitsschritten zur spannenden Aufnahme eines Bauteils,
Figuren 10a bis 10c schematische Darstellungen der einzelnen Arbeitsschritte entlang der Schnittlinie IX-IX in Figur 9,
Figur 11 eine perspektivische Ansicht von zwei Spannvorrichtungen an einem Arbeitstisch zum gleichzeitigen Spannen von zwei Kanten eines Behälters,
Figur 12 eine Prinzipdarstellung von zwei Aufnahmedornen von zwei Spannvorrichtungen gemäß Figur 11,
Figur 13 eine schematische Draufsicht im Spannzustand der Spannvorrichtungen von Figur 12.
Figuren 14a bis 14c schematische Ansichten einer Spannvorrichtung zum Spannen von rohrförmigen Bauteilen,
Figur 15 eine perspektivische Ansicht eines Positioniermoduls in einer Ausgangsposition,
Figur 16 eine perspektivische Ansicht des Positioniermoduls gemäß Figur 15 in einer Ausrichtposition,
Figur 17 eine perspektivische Ansicht der Spannvorrichtung gemäß den Figuren 14a bis 14c mit dem Positioniermodul gemäß Figur 17 in der Ausrichtposition,
Figuren 18a und 18b eine schematische Abfolge von Arbeitsschritten zum Positionieren der Blechbauteile zueinander mit dem Positioniermodul gemäß Figur 15 und
Figur 19 eine schematische Schnittdarstellung entlang der Linie XVIII-XVIII in Figur 18.

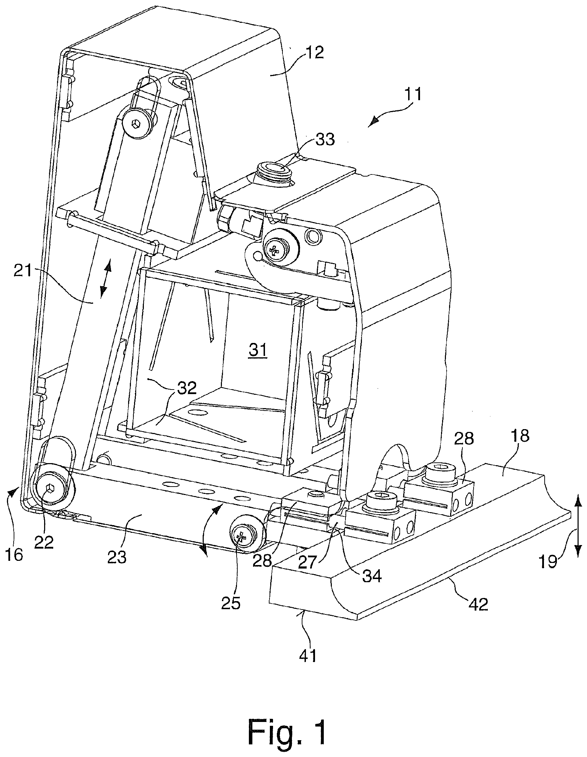

In Figur 1 ist eine perspektivische Ansicht eines Spannmoduls 11 dargestellt, wobei ein vorderer Gehäuseabschnitt abgenommen ist. Dieses Spannmodul 11 umfasst ein Gehäuse 12, in welchem ein Wegerzeugungselement 14 vorgesehen ist, das über ein Hebelgetriebe 16 eine Spannbacke 18 entlang eines Arbeitshubes beziehungsweise Spannhubs gemäß Pfeil 19 auf und ab bewegt. Das Wegerzeugungselement 14 ist feststehend in dem Gehäuse 12 oder einem Rahmen des Gehäuses 12 angeordnet. Das Wegerzeugungselement 14 besteht bevorzugt aus einem pneumatischen Hubzylinder. Alternativ kann auch ein hydraulischer Hubzylinder oder elektromagnetischer Antrieb vorgesehen sein. An einer Stirnseite des Gehäuses 12 ist ein Anschluss 33 vorgesehen, an welchem eine Versorgungsleitung, insbesondere Pneumatikleitung, für das Wegerzeugungselement 14 anschließbar ist.

An dem Wegerzeugungselement 14 ist eine Zug- bzw. Schubstange 21 des Hebelgetriebes 16 befestigt. Über ein Gelenk 22 ist die Zug- bzw. Schubstange 21 mit einem Spannhebel 23 verbunden, der über eine am Gehäuse 12 feststehend gelagerte Schwenkachse 25 drehbar gelagert ist. Der Spannhebel 23 und die Zug- bzw. Schubstange 21 bilden das Hebelgetriebe 16. Zwischen dem Spannhebel 23 und der Spannbacke 18 ist ein Festkörpergelenk 27 angeordnet. Gemäß dem ersten Ausführungsbeispiel ist zur Aufnahme des Festkörpergelenkes 27 jeweils an dem Spannhebel 23 und der Spannbacke 18 ein lösbares Spannelement 28 vorgesehen. Dadurch kann das Festkörpergelenk 27 austauschbar und auf den jeweiligen Einsatzfall abgestimmt einsetzbar sein. Das Festkörpergelenk 27 ist gemäß dem ersten Ausführungsbeispiel als Federstab ausgebildet.

Zur Ansteuerung des Spannhubes 19 der Spannbacke 18 sind bevorzugt zwei parallel mit Abstand zueinander angeordnete Hebelgetriebe 16 angeordnet. Dazwischen liegend, insbesondere zwischen den Zug- bzw. Schubstangen 21 der Hebelgetriebe 16, ist das Wegerzeugungselement 14 platzsparend angeordnet. Durch die parallele Ansteuerung von zwei Hebelgetrieben 16 kann eine gleichmäßig über die Länge der Spannbacke 18 verteilte Krafteinleitung erfolgen.

Das Spannmodul 11 weist im Gehäuse 12 des Weiteren im mittleren Bereich eine Positionieröffnung 31 auf, welche beispielsweise durch vier Wandabschnitte 32 gebildet ist, die jeweils an eine vordere und hintere Gehäusewand angrenzend die Positionieröffnung 31 bilden, so dass das Spannmodul 11 bezüglich der mechanisch bewegten und im Gehäuse 12 liegenden Bauteilen geschlossen ist. Die Positionieröffnung 31 ist bevorzugt an die Geometrie eines nachfolgend noch näher beschriebenen Spannbalkens einer Spannvorrichtung angepasst.

In dem Gehäuse 12 ist des Weiteren ein Rückstellelement vorgesehen, durch welches das Hebelgetriebe 16 aus einer Spannposition wieder in eine Ausgangsposition zurückgesetzt wird. Dies kann beispielsweise ein Dämpfungselement, Federelement oder dergleichen sein.

Das Hebelgetriebe 16 ist im Gehäuse 12 des Spannmoduls 11 derart vorgesehen, dass dieses sich außerhalb der Wandabschnitte 32 entlang der Positionieröffnung 31 erstreckt. Dabei können gleichzeitig auch die erforderlichen Hebelarme platzsparend bereit gestellt werden, die zum Aufbringen der Spannkraft erforderlich sind. Dabei ist bevorzugt vorgesehen, dass der Hebelarm zwischen der Schwenkachse 25 und dem Gelenk 22 wenigstens doppelt so lang, vorzugsweise wenigstens dreifach so lang, wie der Hebelarm zwischen der Schwenkachse 25 und einem freien Ende 34 der Zug- bzw. Schubstange 23, ausgebildet ist. Dadurch kann bei einem geringen Arbeitshub des Wegerzeugungselementes 14 ein vordefinierter Spannhub 19 erzielt werden, der vorzugsweise weniger als 12 mm beträgt.

Die Spannbacke 18 ist vorzugsweise austauschbar und an eine Schweißkante des Bauteils anpassbar ausgebildet. Gleichzeitig kann auch eine entsprechende Materialauswahl für verschiedene Spannbacken 18 erfolgen. Bevorzugt weist die Spannbacke 18 eine Spannfläche 41 auf, welche sich bevorzugt vollflächig in der Länge und Breite der Spannbacke 18 erstreckt. Darüber hinaus ist eine spitz zulaufende Spannkante 42 ausgebildet, welche zu einer Fügestelle beziehungsweise zu einer zu bildenden Schweißnaht weist. Ein gegenüberliegender Bereich der Spannbacke 18 ist im Querschnitt biegesteif ausgebildet.

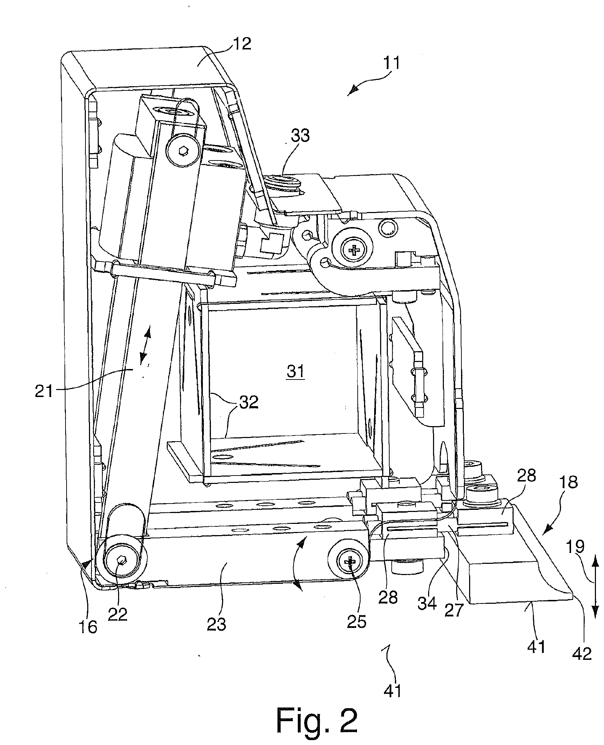

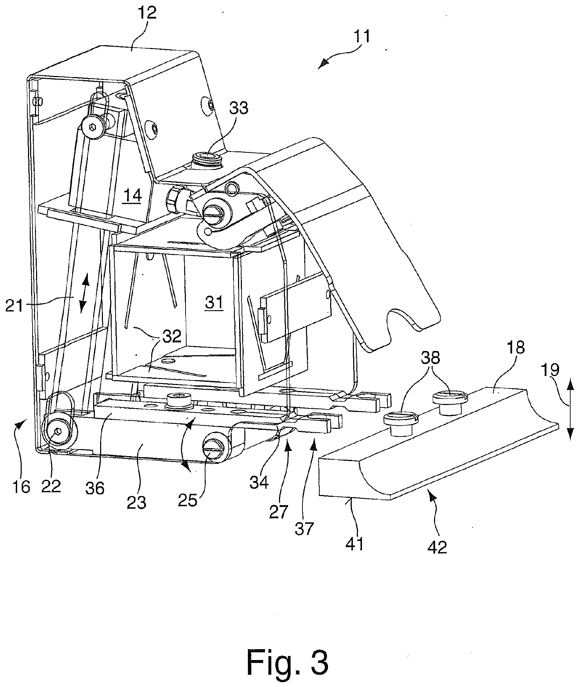

In Figur 3 ist eine alternative Ausführungsform zu den Figuren 1 und 2 dargestellt. Diese Ausführungsform weicht von der Ausgestaltung des Festkörpergelenkes 27 der Figuren 1 und 2 ab. Im Übrigen wird auf die vorstehenden Ausführungen Bezug genommen.

Das Festkörpergelenk 27 ist bei dieser Ausführungsform stabförmig ausgebildet, wobei daran angrenzend ein Befestigungsabschnitt 36 vorgesehen ist, um das Festkörpergelenk 27 an dem Spannhebel 24 vorzugsweise austauschbar zu fixieren.

Gegenüberliegend ist eine gabelförmige Aufnahme 37 vorgesehen, welche an Befestigungselementen 38, insbesondere Schraubenköpfen zur klemmenden Befestigung, an der Spannbacke 18 angreift. Zwischen der Aufnahme 37 und dem Befestigungsabschnitt 36 ist ein verjüngter Querschnitt gebildet, der das Festkörpergelenk 27 bildet. Dieser beispielsweise rechteckförmige Querschnitt ist derart ausgebildet, dass eine elastische Nachgiebigkeit in und entgegen dem Spannhub gemäß Pfeil 19 gebildet ist, wobei in einer Richtung senkrecht dazu - also in Längsachse der Spannbacke 18 als auch in Längsachse des Festkörpergelenks 27 - eine hohe Steifigkeit gegeben ist. Im Ausführungsbeispiel sind sowohl die Aufnahme 37 als auch das Festkörpergelenk 27 durch zwei separate Balkenabschnitte ausgebildet. Dadurch kann zusätzlich eine Aufspreizung der Aufnahme 27 beim Aufschieben auf die Befestigungselemente 38 für eine vorgespannte Positionierung der Spannbacke 18 zum Spannhebel 23 erfolgen.

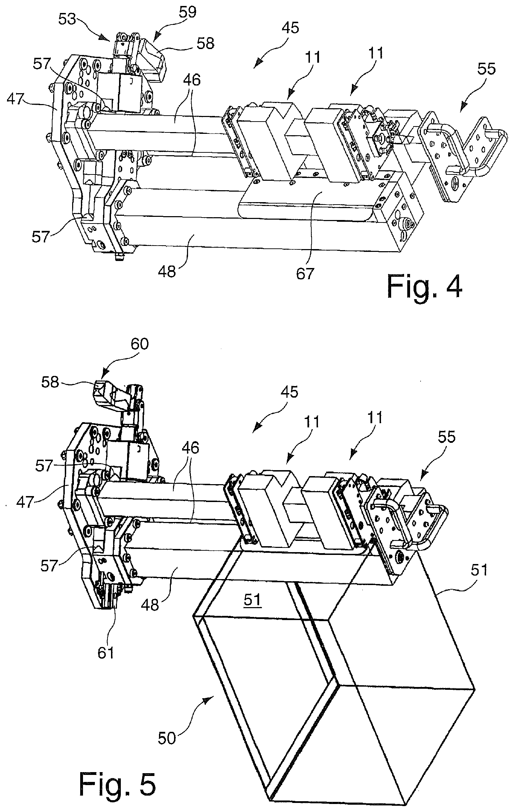

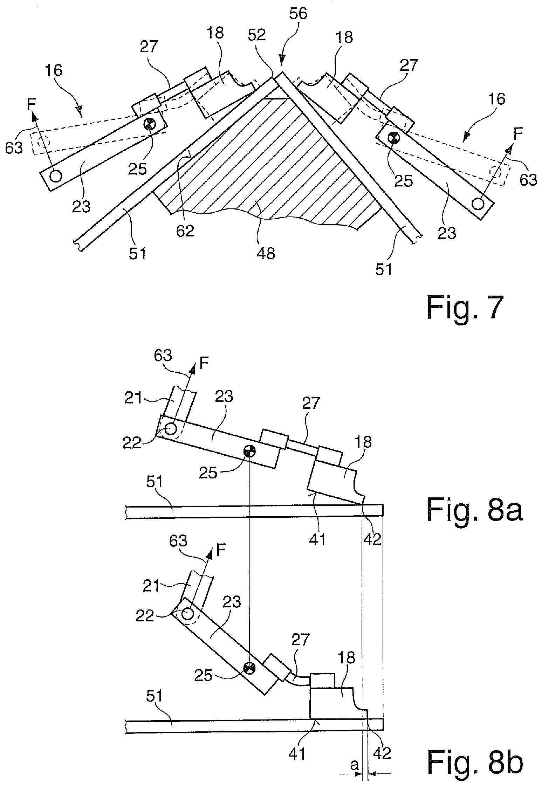

In Figur 4 ist eine perspektivische Seitenansicht einer erfindungsgemäßen Spannvorrichtung 45 dargestellt. Diese Spannvorrichtung 45 umfasst zwei Spannbalken 46, an denen die vorbeschriebenen Spannmodule 11 entlang deren Längsachse aufsetzbar und verfahrbar sind. Diese Spannbalken 46 sind an einer Grundplatte 47 austauschbar befestigt. An dieser Grundplatte 47 ist des Weiteren ein Aufnahmedorn 48 austauschbar gehalten. Die beiden Spannbalken 46 und der Aufnahmedorn 48 sind einseitig an der Grundplatte 47 befestigt und in einem Dreieck zueinander angeordnet. An dem Aufnahmedorn 48 werden zwei Bauteile 51 zueinander positioniert und mit den Spannmodulen 11 gespannt gehalten. Diese können zwei separate Bauteile 51, insbesondere Blechteile, sein, wie dies in Figur 7 dargestellt ist oder nach einem Umformschritt bereits miteinander verbundene Bauteile 51 sein, die Teile eines Bauelementes, wie beispielsweise eines Behälters 50 gemäß Figur 5, darstellen.

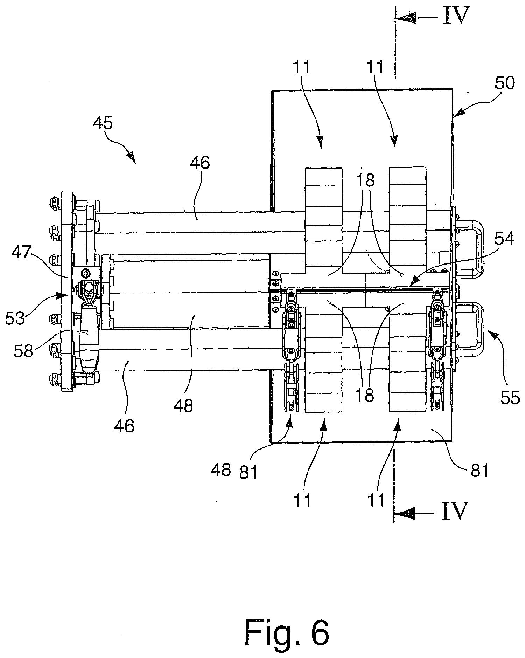

Figur 5 zeigt eine perspektivische Ansicht der Spannvorrichtung 45 mit daran gespannten Bauteilen 51 des Behälters 50. Figur 6 zeigt eine schematische Ansicht von oben auf Figur 5.

Bei dieser Ausführungsform der Spannvorrichtung 45 sind an jedem Spannbalken 46 zwei Spannmodule 11 vorgesehen. Diese sind jeweils angrenzend an ein frei auskragendes Ende der Spannbalken 48 positioniert. Die Spannmodule 11 sind spiegelbildlich einander gegenüber liegend angeordnet, so dass die Spannbacken 18 einen Spalt 54 bilden (Figur 6), innerhalb dem der durch die Spannbacken 18 einander zugeordneten Schweißkanten Bauteile 51 zur Bildung einer Fügestelle liegen, um eine lineare Schweißkante mit verschiedenen Nahtgeometrien, wie beispielsweise Stumpfstoß mit I-Naht, Eckstoß beziehungsweise T-Stoß oder I-Stoß, Überlappstoß oder Ecknaht auszubilden.

Zur Bildung des Spaltes 54 weisen die Spannbacken 18 bevorzugt eine Länge auf, so dass diese bei der Aneinanderreihung von mehreren Spannmodulen 11 entlang der Spannbalken 46 einen durchgehenden Spalt 54 bilden. Dadurch können diese Spannbacken 18 als Prallwand für das durch einen Schweißprozess nachgeführte Schutzgas dienen. Dies führt zu einer kanalisierenden Wirkung der Schutzbegasung, wodurch die Nahtqualität durch eine verringerte Oxidbildung in der Nahtoberraupe verbessert wird. Alternativ oder zusätzlich kann die Oxidbildung in der Nahtunterraupe über eine schutzgasdurchströmte Nut im Aufnahmedorn 48 ebenfalls minimiert werden. Dies kann die nachträgliche Behandlung der Schweißnahtoberfläche zur Entfernung einer Oxidschicht überflüssig machen.

Am freien auskragenden Ende der Spannbalken 46 und des Aufnahmedorns 48 greift eine Haltevorrichtung 55 an, welche zu den Spannbalken 46 und dem Aufnahmedorn 48 jeweils ein Befestigungspunkt aufweist, um diese in einem vorbestimmten Abstand zueinander zu fixieren. Diese Haltevorrichtung 55 ist zu den Spannbalken 46 und dem Aufnahmedorn 48 abnehmbar oder an einem davon schwenkbar gelagert, so dass nach dem wahlweise Aufbringen der Spannmodule 11 und gegebenenfalls der Bauteile 51 anschließend daran eine Befestigung erfolgt, so dass trotz der Aufbringung einer Spannkraft über die Spannmodule 11 der Abstand zwischen den Spannbalken 46 und dem Aufnahmedorn 48 trotz einer einseitigen Einspannung der Spannbalken 46 und des Aufnahmedorns 48 konstant bleibt. Dadurch werden entlang der Längsachse des Aufnahmedorns 48, entlang welcher die lineare Schweißkante verläuft, gleichmäßige Spannbedingungen zur Fixierung der Blechbauteile 51 ermöglicht.

Die Spannbalken 46 und der Aufnahmedorn 48 sind an der Grundplatte 47 über eine Zentriereinrichtung 53 aufgenommen. Diese Zentriereinrichtung 53 ermöglicht, dass die Spannbalken 46 relativ zum Aufnahmedorn 48 oder umgekehrt oder relativ zueinander verfahrbar sind, um einen größeren Abstand zum Bestücken des Bauteils 51 einzustellen. Darüber hinaus umfasst die Zentriereinrichtung 53 sogenannte Zentrierblöcke 57, die an der Grundplatte 47 befestigt sind, welche in einem gespannten Zustand ineinander greifen. Dadurch können die auftretenden Spannkräfte und daraus resultierende Biegemomente gesichert in die Grundplatte 47 eingeleitet und eine höhere Steifigkeit ausgebildet werden. Zur Betätigung der Zentriereinrichtung 53 ist ein Spannhebel 58 vorgesehen, der aus einer Öffnungsposition 59 gemäß Figur 4 in eine Schließposition 60 gemäß Figur 5 überführbar ist. Die Zentrierblöcke 57 greifen ineinander. Im Ausführungsbeispiel ist vorgesehen, dass der Aufnahmedorn 48 entlang einer Führung 61 sich gegenüber den Spannbacken 18 absenkt.

Die Anordnung der Spannbalken 46 und des Aufnahmedorns 48 an der Grundplatte 47 weist den Vorteil auf, dass diese an bereits in der Schweißtechnik eingesetzten Baukastensystemen, insbesondere Arbeitstischen oder dergleichen, mit einer vorgegebenen Lochrasterung befestigt werden können.

Anhand von Figur 7 wird ein Spannvorgang von zwei einander gegenüberliegenden Spannmodulen 11 zur Zuordnung von zwei einander gegenüberliegenden Bauteilen 51 zur Bildung der Fügestelle 56 näher beschrieben.

Zunächst wird das linke Bauteil 51 zu einer Auflagefläche 62 des Aufnahmedorns 48 positioniert und gehalten. Anschließend wird das Wegerzeugungselement 14 beispielsweise mit Druckluft beaufschlagt, so dass eine Schwenkbewegung des Spannhebels 23 in Pfeilrichtung 63 um die feststehende Schwenkachse 25 eingeleitet wird. Die Spannbacke 18 greift zunächst mit deren Spannkante 42 an dem Bauteil 51 an. Dieser erste Spannzustand ist mit durchgezogenen Linien dargestellt. Darauf folgend wird eine weitere Spannkraft über das Wegerzeugungselement 14 aufgebracht, so dass der Spannhebel 23 in die gestrichelte Position übergeführt wird. Dies führt dazu, dass das Festkörpergelenk 27 elastisch nachgiebig ausgelenkt wird, wobei sich die Spannfläche 41 des Spannbackens 18 auf der Oberfläche 51 des Bauteils anschmiegt und aufliegt, so dass zumindest eine linienförmige, insbesondere flächenförmige, Anlage gegeben ist.

Anschließend wird das rechte Bauteil 51 zur Stirnfläche 52 des Bauteils 51 positioniert, um einen Stoß oder die Fügestelle 56 für die nachfolgend zu bildende Schweißnaht zu bilden. Das rechte Spannmodul 11 wird anschließend mit einer Spannkraft analog beaufschlagt.

Alternativ können beide Bauteile 51 zum Aufnahmedorn 48 gleichzeitig positioniert und anschließend das linke und rechte Spannmodul 11 gleichzeitig oder zeitverzögert beaufschlagt werden.

Die Ausgestaltung des Festkörpergelenkes 27, welches in Spannrichtung 19 elastisch nachgiebig und zumindest in einer Querrichtung hierzu, bevorzugt in beiden Querrichtungen hierzu, mechanisch steif ausgebildet ist, weist den Vorteil auf, dass ausgehend von der ersten Spannphase gemäß Figur 8a zum Überführen in eine Endphase gemäß Figur 8b gegebenenfalls nur ein Verrutschen des Bauteils 51 in Richtung der Fügestelle 56 erfolgen kann, wie dies durch den Abstand a in Figur 8b dargestellt ist, um die Entstehung eines Spaltes zu vermeiden. Das Festkörpergelenk 27 kann alternativ zum Biegestab auch als Blattfederelement oder profiliertes Element ausgebildet sein.

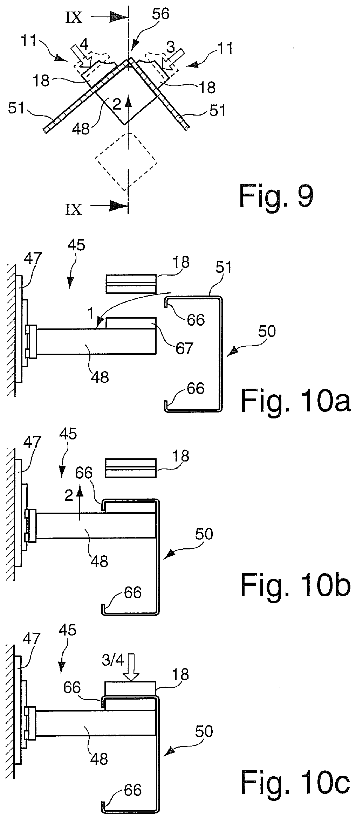

In Figur 9 und den Figuren 10a bis 10c ist eine schematische Abfolge von einzelnen Arbeitsschritten 1 bis 4 zum Spannen eines Behälters 50 dargestellt, der an seinen oberen Seitenkanten jeweils eine Umkantung 66 aufweist, die zur Behältermitte weisen. Zur Aufnahme solcher Behälter 50 oder Bauteile 51 mit einer Umkantung 66 sind auf dem Aufnahmedorn 48 Hilfsspannelemente 67 anbringbar, die beispielsweise eine Dicke aufweisen, welche der Breite der Umkantung 66 entspricht. Dadurch kann das Bauteil 51 in den Aufnahmedorn 48 eingehängt werden, wobei die Seitenwand des Behälters 50 an dem Hilfsspannelement 47 aufliegt und unter Spannung mit dem Spannmodul 11 gehalten wird, so dass die Stirnseiten der Seitenwände zur Bildung einer Fügestelle 56 fest zueinander positioniert sind.

Daraus ergibt sich die Abfolge der Arbeitsschritte 1 bis 4, in welchen zunächst in Schritt 1 der Aufnahmedorn 48 mittels der Zentriereinrichtung 53 nach unten verfahren wird, um den Behälter 50 gemäß Figur 10a einzuhängen. Anschließend wird in Schritt 2 der Aufnahmedorn 48 in eine Spannposition gemäß Figur 10b übergeführt, so dass darauffolgend in Schritt 3 gemäß Figur 10c in Verbindung mit Figur 9 zunächst das rechte Spannmodul 11 mit einer Spannkraft beaufschlagt wird und darauffolgend in Schritt 4 das linke Spannmodul 11 ebenso mit einer Spannkraft beaufschlagt wird. Im Anschluss daran kann entlang der Fügestelle 56 eine Schweißnaht gesetzt werden.

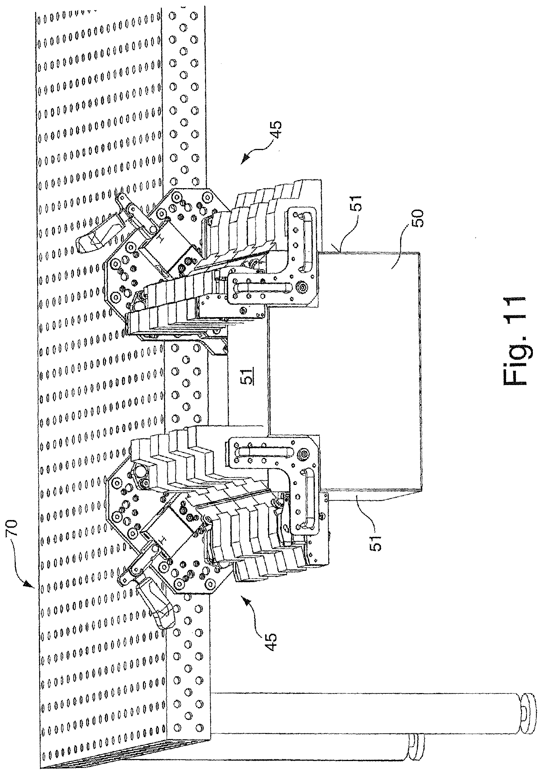

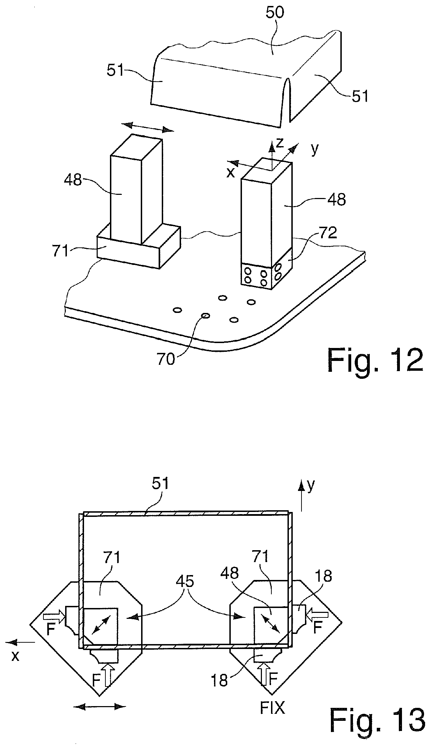

In Figur 11 ist eine perspektivische Ansicht auf zwei an einem Arbeitstisch 70, insbesondere an einer sogenannten Demmeler-Tischplatte, angeordnete Spannvorrichtungen 45 dargestellt, welche üblicherweise in der Schweißtechnik eingesetzt werden. Durch die Anordnung von zwei Spannvorrichtungen 45 im Abstand zueinander können zwei Kanten des Behälters 50, Gehäuses oder dergleichen gleichzeitig gespannt werden. Dabei kann die eine Spannvorrichtung 45 mit einem Adapterelement 72 oder einer Adapterplatte unmittelbar auf dem Arbeitstisch 70 fixiert sein, wohingegen die weitere Spannvorrichtung 45, wie diese in Figur 12 dargestellt ist, über ein Linearmodul 71 auf dem Arbeitstisch 70 befestigt ist. Dieses Linearmodul 71 weist bevorzugt einen Verstellweg in einer Achse der Montageebene des Arbeitstisches auf, der kleiner/gleich einer Lochrasterung des Arbeitstisches 70 ausgebildet ist. Dadurch kann eine exakte Einjustierung der beiden Spannvorrichtungen 45 zum Spannen von zwei Kanten des Behälters 50 eingestellt werden. Dies ermöglicht eine rationelle Herstellung von solchen Bauteilen.

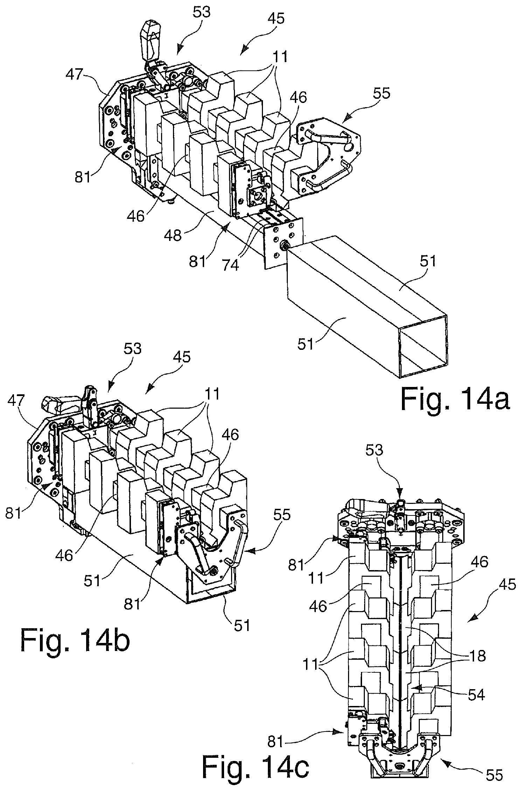

In den Figuren 14a bis 14c sind perspektivische Ansichten einer Spannvorrichtung 45 dargestellt, welche das Spannen von Bauteilen 51 zur Bildung von rohrförmigen Bauelementen dient. In Figur 14a ist die Spannvorrichtung 45 in einer Bestückungsposition dargestellt. Hierbei ist der Aufnahmedorn 48 im Querschnitt an die Innenkontur der aufzunehmenden Blechteile 51 angepasst oder es sind entsprechende Hilfsspannelemente 67 daran angeordnet. Ergänzend sind in diesem Ausführungsbeispiel der Aufnahmedorn 48 zum Bauteil 51 weisend Öffnungen 74 dargestellt, durch welche die Zuführung eines Schutzgases ermöglicht ist. Nach dem Einschieben des ersten und zweiten Bauteils 51 zur Positionierung auf dem Aufnahmedorn 48 wird die Haltevorrichtung 55 zum Aufnahmedorn 48 und weiteren Spannbalken 46 positioniert, wie dies in Figur 14b dargestellt ist. Anschließend werden die linken Spannmodule 11 und darauffolgend die rechten Spannmodule 11 oder umgekehrt mit dem Spannhub 19 beaufschlagt. Durch die aneinander grenzenden Spannbacken 18 kann ein durchgehender Spalt 54 erzeugt werden, wie dies in Figur 14c dargestellt ist.

Zur exakten Positionierung des oder der Bauteile 51 auf dem Aufnahmedorn 48 sind bevorzugt Positioniermodule 81 vorgesehen, die auf dem Spannbalken 46 positionierbar und beispielsweise einem jeweiligen Ende des auf dem Aufnahmedorns 48 aufzubringenden Bauteils 51 zugeordnet sind. Dies geht beispielsweise aus den Figuren 14a und 14c hervor. Zwischen den Positioniermodulen 81 sind die Spannmodule 11 angeordnet. Dabei ist es ausreichend, wenn auf einem der beiden Spannbalken 46 die Positioniermodule 81 angeordnet sind.

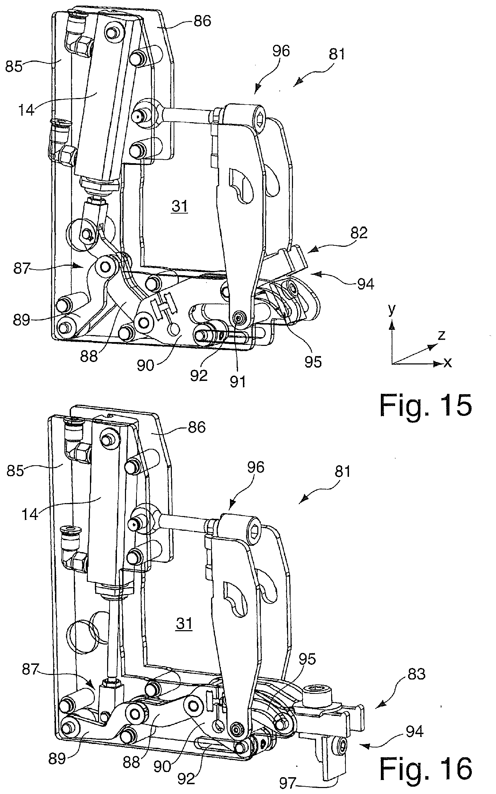

In Figur 15 ist eine perspektivische Ansicht des Positioniermoduls 11 in einer Ausgangsposition 82 und in Figur 16 in einer Ausrichtposition 83 dargestellt.

Das Positioniermodul 81 umfasst ein Gehäuse 84, welches aus einem vorderen und hinteren Wandabschnitt 85, 86 ausgebildet ist. Dazwischen liegend ist ein Wegerzeugungselement 14 angeordnet, welches einen Hebelmechanismus 87 betätigt. Dieser Hebelmechanismus 87 ist bevorzugt als Kniehebel ausgebildet. Eine Zug- bzw. Schubstange 88 ist an einem Schwenkhebel 89 schwenkbar angelenkt. Bei einer Hubbewegung des Wegerzeugungselementes 14 wird die Zug- bzw. Schubstange 88 in X-Richtung gemäß Figur 15 bewegt, wobei gleichzeitig ein Schiebe-Schwenk-Element 90 in X-Richtung bewegt wird. Dieses Schiebe-Schwenk-Element 90 ist in einer Kulisse 92 im Wandabschnitt 85, 86 in X-Richtung hin und her verfahrbar. Gleichzeitig wird bei einer Schubbewegung der Zug- bzw. Schubstange 88 ein Ausrichtelement 94 entlang einer weiteren Kulisse 95 im Schiebe-Schwenk-Element 90 betätigt, so dass dieses aus der Ausgangsposition 82 in die dargestellte Ausrichtposition 83 übergeführt wird. Die Wandabschnitte 85, 86 umfassen eine Positionieröffnung 31, wobei diese durch wenigstens drei Stirnseiten an den Wandabschnitten 85, 86 umrandet ist. Am oberen Ende der Positionieröffnung 31 ist ein Spannelement 96 vorgesehen, durch welches die Breite der Positionieröffnung 31 veränderbar ist, um nach dem Aufsetzen des Positioniermoduls 81 auf dem Spannbalken 46 durch ein Spannen des Spannelements 96 das Positioniermodul 81 in seiner Lage zum Spannbalken 46 zu fixieren.

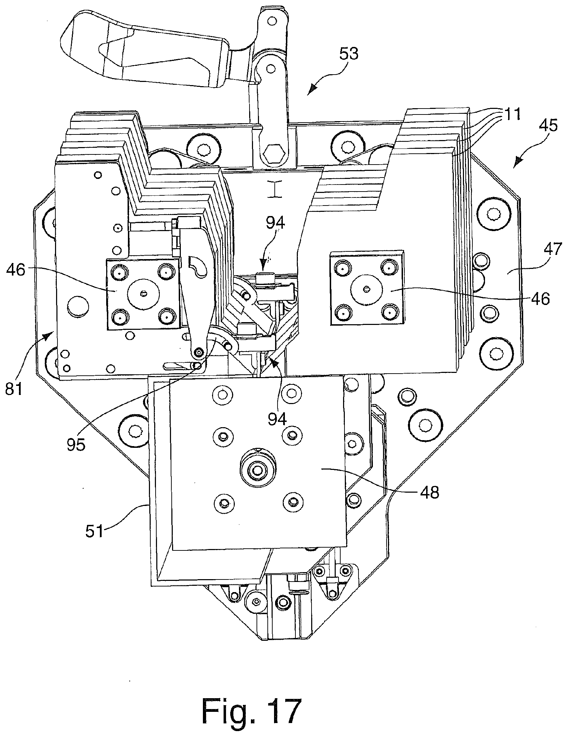

In Figur 17 ist eine schematisch vergrößerte Ansicht der Spannvorrichtung 45 gemäß Figur 14c dargestellt, aus welcher die Funktion des Positioniermoduls 81 hervorgeht und erörtert wird. In dieser Darstellung ist die Haltevorrichtung 55 nicht dargestellt.

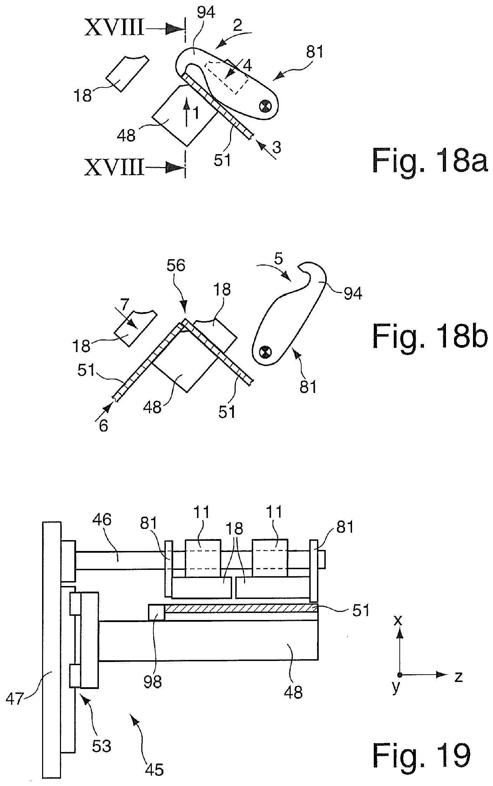

Vor dem Einsetzen des Bauteils 51 werden die Positioniermodule 81 aus der Ausgangsposition 82 in die Ausrichtposition 83 übergeführt. Dabei wird das Ausrichtelement 94 entlang der Kulisse 95 geführt. Dadurch kann das Ausrichtelement 94 während der Zustellbewegung aus der Ausgangsposition 82 in die Ausrichtposition 83 den Spannbacken 18 übergreifen, so dass eine Stirnseite 97 des Ausrichtelementes 94 zur Anlage auf dem Aufnahmedorn 48 gelangt und gleichzeitig eine platzsparende Anordnung des Positioniermoduls 81 zum Spannmodul 11 gegeben ist. Bevorzugt ist der Spannbacken 18 breiter als das Positioniermodul 81 ausgebildet. Anschließend wird das Bauteil 51 zur Anlage zu den beiden Ausrichtelementen 94 des Positioniermoduls 81 auf den Aufnahmedorn 48 gebracht und danach die dem Bauteil 51 zugeordneten Spannmodule 11 betätigt. Nach dem Spannen des Bauteils 51 durch die Spannmodule 11 werden die Positionsmodule 81 wieder in eine Ausgangsposition 82 übergeführt. Dieser Übergang ist beispielsweise schematisch in den Figuren 18a und 18b dargestellt. Anschließend wird das weitere Bauteil 51 zur Anlage zum ersten Bauteil 51 zur Bildung der Fügestelle 56 positioniert, so dass anschließend die gegenüberliegende Reihe der Spannmodule 11 zur Durchführung einer Spannbewegung angesteuert werden.

Da das erste Bauteil 51 über die Positioniermodule 81 lagerichtig zum Aufnahmedorn 48 positioniert ist, bedarf es für das weitere Bauteil 51 keiner weiteren Positionierung über die Positioniermodule 81, sondern lediglich zur Anlage an dem ersten Bauteil 51.

In Figur 19 ist eine schematische Seitenansicht einer prinzipiellen Ausführungsform der Spannvorrichtung 45 gemäß den Figuren 14a bis 14c dargestellt. Ergänzend kann auf dem Aufnahmedorn 48 ein Anschlagelement 98 vorgesehen sein, das eine Wegbegrenzung für das aufzunehmende Bauteil 51 in Längsachse des Aufnahmedorns 48 - also in der Z-Richtung - ermöglicht. Dieses Anschlagelement 98 ist entlang dem Aufnahmedorn 48 verfahrbar und positionierbar und kann bedarfsweise auch entnommen werden. Dadurch kann eine exakte Positionierung von zwei einander gegenüberliegenden Bauteilen 51 erfolgen, die noch keine Verbindung durch einen weiteren Bauteilabschnitt aufweisen.

Die vorstehend beschriebene Spannvorrichtung 45 mit den Spannmodulen 11, welche an den Spannbalken 46 anordenbar und dem Aufnahmedorn 48 zuordenbar sind, ermöglicht die Ausbildung einer modularen Spannvorrichtung 45 zur Herstellung von linearen Schweißkanten, durch welche unterschiedliche Bauteile, Gehäuse, Behälter oder dergleichen in einer eindeutigen Position für die Herstellung der Schweißnaht gespannt werden können. Ergänzend ist dabei über die Spannmodule 11 eine sensorische Abfrage ermöglicht, ob das oder die Bauteile 51 vorhanden sind beziehungsweise die Spannmodule 11 die Spannzustände eingenommen haben. Dadurch kann auch ein höherer Automatisierungsgrad erzielt werden.

## Patentansprüche

1. Spannmodul für eine Spannvorrichtung (45) mit einem Gehäuse (12), welches ein Wegerzeugungselement (14) und ein Getriebe (16) aufnimmt, wobei das Wegerzeugungselement (14) und das Getriebe (16) zumindest einen Spannbacken (18) aus einer Ausgangsposition in eine Spannposition überführen, **dadurch gekennzeichnet, dass** zwischen dem Getriebe (16) und der Spannbacke (18) zumindest ein Festkörpergelenk (27) vorgesehen und in Richtung einer Spannbewegung der Spannbacke (18) elastisch nachgiebig ist, und dass das Getriebe (16) zumindest eine Zug- bzw. Schubstange (21) und zumindest einen Spannhebel (23) aufweist, die an deren aufeinander zuweisenden Enden mit einem Gelenk (22) miteinander verbunden sind und an dem anderen Ende des Spannhebels (23) die Spannbacke (18) anordenbar ist, wobei der Spannhebel (23) um eine feststehende, am Gehäuse (12) angeordnete Schwenkachse (25) gelagert ist.

2. Spannmodul nach Anspruch 1, **dadurch gekennzeichnet, dass** ein oder mindestens zwei mit Abstand zueinander angeordnete und parallel verlaufende Getriebe (16) mit dem Wegerzeugungselement (14) betätigbar sind und gemeinsam an der zumindest einen Spannbacke (18) angreifen, die vorzugsweise austauschbar mittels einer Spann-, Schnapp-, Rast- oder Klemmverbindung an dem zumindest einen Spannhebel (23) des Hebelgetriebes (16) anordenbar ist.

3. Spannmodul nach Anspruch1, **dadurch gekennzeichnet, dass** das Festkörpergelenk (27) einstückig an einem Spannhebel (23) des Getriebes (16) anordenbar ist.

4. Spannmodul nach einem der vorhergehenden Ansprüche, **dadurch gekennzeichnet, dass** an dem Getriebe (16) und/oder dem Wegerzeugungselement (14) ein Rückstellelement angreift, welches in einem nicht beaufschlagten Zustand des Wegerzeugungselementes (14) das zumindest eine Getriebe (16) in eine Ausgangsposition zurücksetzt und die Spannbacke (18) in eine Ausgangsposition überführt.

5. Spannmodul nach einem der vorhergehenden Ansprüche, **dadurch gekennzeichnet, dass** das Gehäuse (12) einen rechten und linken Wandabschnitt aufweist, in welchem jeweils eine Positionieröffnung (31) zur aufsteckbaren Anordnung des Gehäuses (12) an einem Spannbalken (46) einer Spannvorrichtung (45) vorgesehen ist, wobei die Positionieröffnungen (31) miteinander fluchten und das zumindest eine Hebelgetriebe (16) zumindest entlang einer Außenseite der Positionieröffnung (31) geführt ist.

6. Spannvorrichtung zum Spannen von wenigstens einem Bauteil (51) für einen nachfolgenden Schweißvorgang, mit zumindest einem Spannmodul (11) nach einem der Ansprüche 1 bis 5, und mit zumindest einem Positioniermodul (81) für die Spannvorrichtung (45) mit einem Gehäuse (84), welches ein Wegerzeugungselement (14) und einen Getriebemechanismus (87) aufweist, wobei mit dem Getriebemechanismus (87) ein Ausrichtelement (94) ansteuerbar ist, welches mit einer Schiebe-Schwenk-Bewegung aus einer Ausgangsposition (82) in eine Ausrichtposition (83) überführbar ist, wobei an einer Grundplatte (47) ein Aufnahmedorn (48) und zumindest zwei Spannbacken (46) frei auskragend anordenbar sind,
- dass die zumindest zwei Spannbacken (46) und der Aufnahmedorn (48) in einer dreieckförmigen Anordnung zueinander an der Grundplatte (47) positionierbar sind,
- dass an jedem Spannbalken (46) zumindest ein Spannmodul (11) anordenbar ist und
- dass der zumindest eine Spannbacken (18) des am Spannbalken (46) angeordneten Spannmoduls (11) dem Aufnahmedorn (48) zum Fixieren des Bauteils (51) zum Aufnahmedorn (48) zugeordnet ist.

7. Spannvorrichtung nach Anspruch 6, **dadurch gekennzeichnet, dass** die Spannmodule (11) spiegelbildlich zum Aufnahmedorn (48) an dem Spannbalken (46) angeordnet sind und vorzugsweise die einander gegenüberliegenden Spannbacken (18) unter Bildung eines Spaltes (54) die einander gegenüberliegenden Bauteile (51) mit einer Fügestelle zum Aufnahmedorn (48) fixieren.

8. Spannvorrichtung nach Anspruch 6 oder 7, **dadurch gekennzeichnet, dass** ein oder mehrere Spannmodule (11) auf demselben Spannbalken (46) anordenbar und entlang dem Spannbalken (46) verschiebbar aufgenommen sind und vorzugsweise das Gehäuse (12) des Spannmoduls (11) formschlüssig und/oder kraftschlüssig mit dem Spannbalken (46) verbindbar ist.

9. Spannvorrichtung nach einem der Ansprüche 6 bis 8, **dadurch gekennzeichnet, dass** der Spannbalken (46) eine Querschnittsgeometrie aufweist, welche mit einer im Außenumfang komplementären Positionieröffnung (31) im Gehäuse (12) des Spannmoduls (11) eine verdrehsichere Aufnahme des Spannmoduls (11) zum Spannbalken (46) bildet.

10. Spannvorrichtung nach einem der Ansprüche 6 bis 9, **dadurch gekennzeichnet, dass** der Aufnahmedorn (48) und/oder der zumindest eine Spannbalken (46) entlang der Ebene der Grundplatte (47) verfahrbar aufgenommen ist und/oder der zumindest eine Spannbalken (46) und/oder der Aufnahmedorn (48) mit einer Zentriereinrichtung (53) an der Grundplatte (47) befestigbar ist und vorzugsweise die Zentriereinrichtung (53) Zentrierblöcke (57) aufweist, welche die auftretenden Biegemomente des Spannbalkens (46) in die Grundplatte (47) einleiten.

11. Spannvorrichtung nach einem der Ansprüche 6 bis 10, **dadurch gekennzeichnet, dass** an dem Spannbalken (48) das zumindest eine Positioniermodul (81) anordenbar ist, welches entlang der Längsachse des Spannbalkens (48) verfahrbar ist und/oder dass an dem Spannbalken (46) oder dem Aufnahmedorn (48) ein Anschlagelement (98) anordenbar ist, welches entlang der Längsachse des Spannbalkens (46) oder des Aufnahmedorns (48) verfahrbar ist und/oder dass an dem Aufnahmedorn (48) zumindest ein Hilfsspannelement (67) zur Aufnahme von zumindest einem Bauteil (51) mit zumindest einer Ab- oder Umkantung (66) lösbar befestigt ist.

12. Spannvorrichtung nach einem der Ansprüche 6 bis 11, **dadurch gekennzeichnet, dass** der Aufnahmedorn (48) einer Schweißkante von mindestens einem Bauteil (51) zugeordnet zumindest einen Kanal zum Zuführen von einem Schweißgas und/oder Kühlmedium umfasst.

## Claims

1. A clamping module for a clamping device (45) with a housing 12), which accommodates a path generation element(14) and a mechanism (16), wherein the path generation element (14) and the mechanism (16), transfer at least one clamping jaw (18) from a starting position to a clamping position, **characterized in that** at least one solid body joint (27) is provided between the path generation element (14) and the at least one clamping jaw (18), and being elastically resilient in the direction of a clamping movement of the clamping jaw (18) and **in that** the mechanism (16) exhibits at least one push rod or connection rod (21) and at least one clamping lever (23), which at their ends pointing toward one another are connected to one another with a joint (22) and with the clamping jaw (18) being able to be arranged at the other end of the clamping lever (23), wherein the clamping lever (23) is pivoted around a stationary pivoting axis (25) arranged on the housing (12) .

2. The clamping module according to claim 1, **characterized in that** one or at least two mechanisms (16) arranged next to one another and running parallel is / are actuated with the path generation element (14) and jointly engage on the at least one clamping jaw (18) which are preferably arranged exchangeable by means of a snap, tension, snap-on or clamped connection on the at least one clamping lever (23) of the lever mechanism (16).

3. The clamping module according to claim 1, **characterized in that** the solid body joint (27) is arrangeable in a single piece on a clamping lever (23) of the lever mechanism (16).

4. The clamping module according to any one of the previous claims, **characterized in that** a reset element engages on the mechanism (16) and / or on the path generation element (14), said reset element resetting the at least one mechanism (16) to a starting position in a non-impacted state of the path generation element (14) and moving the clamping jaw (18) to a starting position.

5. The clamping module according to any one of the previous claims, **characterized in that** the housing (12) exhibits a right and left wall section in which a positioning opening (31) is provided for plug-on arrangement of the housing (12) on a clamping beam (46) of a clamping device (45), wherein the position openings (31) align with one another and the at least one lever mechanism (16) is guided at least along one exterior of the positioning opening (31).

6. A clamping device for the clamping of at least one component (51) for a subsequent welding operation with at least one clamping module (11) according to any one of Claims 1 to 5, and with at least one positioning module (81) for the clamping device (45) with a housing (84) which comprises a path generation element (14) and a mechanism (87) wherein the mechanism (87) is controlled by an alignment element (94) which is moveable by a pivotary-sliding-movement from a starting position (82) to an alignment position (83), wherein an accommodating pin (48) and at least two clamping jaws (46) are arranged freely projecting on a base plate (47),
that at least two clamping jaws (46) and the accommodating pin (48) are positioned in triangular arrangement to one another on the base plate (47),
that at least one clamping module (11) is arrangeable on each clamping beam (46) and
that the at least one clamping jaw (18) of the clamping module (11) arranged on the clamping beam (46) is assigned to the accommodating pin (48) for the fixing of the component (51) to the accommodating pin (48).

7. The clamping device according to Claim 6, **characterized in that** the clamping modules (11) are arranged mirror-imaged to the accommodating pin (48) on the clamping beam (46) and preferably the clamping jaws (18) facing to one another are forming a gap (54) to fix the components (51) facing one another with one joining edge to the accommodating pin (48).

8. The clamping device according to Claim 6 or 7, **characterized in that** one or more clamping modules (11) are arrangeable on the same clamping beam (46) and are accommodated in such a way as to be movable along the clamping beam (46) and preferably the housing (12) of the clamping module (11) is positively, and / or non-positively connected to the clamping beam (46).

9. The clamping device according to any one of Claims 6 to 8, **characterized in that** the clamping beam (46) exhibits a cross-section geometry which with a complementary positioning opening (31) in the housing (12) of the clamping module (11) forms an anti-turn accommodation of the clamping module (11) to the clamping beam (46).

10. The clamping device according to any one of Claims 6 to 9, **characterized in that** the accommodating pin (48) and / or the at least one clamping beam (46) is accommodated in a moveable manner along the plane of the base plate (47), and / or the at least one clamping beam (46) and / or the accommodating pin (48) is fastened on the base plate (47) with a centering device (53) and preferably the centering device (53) exhibits centering blocks (57) which apply the occurring bending moments of the clamping beam (46) to the base plate (47).

11. The clamping device according to any one of Claims 6 to 10, **characterized in that** the at least one positioning module (81) is arrangeable on the clamping beam (48), said positioning module being movable along the longitudinal axis of the clamping beam (48) and / or that a stop element (98) is arrangeable on the clamping beam (46) or on the accommodating pin (48), said stop element being moveable along the longitudinal axis of the clamping beam (46) or of the accommodating pin (48) and / or that at least one auxiliary clamping element (67) for the accommodation of at least one component (51) is detachably fastened on the accommodating pin (48) with at least angle of bend or one folded edge (66).

12. The clamping device according to any one of Claims 6 to 11, **characterized in that** the accommodating pin (48) at least one channel assigned a welding edge of at least one component (51) for the supply of a welding gas and/or a cooling medium.

## Revendications

1. Module de serrage pour un dispositif de serrage (45), pourvu d'un carter (12) qui reçoit un élément générateur de parcours (14) et un mécanisme (16), l'élément générateur de parcours (14) et le mécanisme (16) faisant passer au moins un mors de serrage (18) d'une position initiale à une position de serrage, **caractérisé en ce qu'**au moins une articulation à corps solide (27) est prévue entre le mécanisme (16) et le mors de serrage (18) et est élastiquement flexible en direction d'un mouvement de serrage du mors de serrage (18), et **en ce que** le mécanisme (16) présente au moins une tige de poussée et de traction (21) et au moins un levier de serrage (23) lesquels sont reliés l'un à l'autre au niveau de leurs extrémités qui se font face par une articulation (22), et **en ce que** le mors de serrage (18) peut être disposé à l'autre extrémité du levier de serrage (23), le levier de serrage (23) étant logé autour d'un axe de pivotement (25) fixe disposé sur le carter (12).

2. Module de serrage selon la revendication 1, **caractérisé en ce que** l'élément générateur de parcours (14) permet d'activer un mécanisme ou au moins deux mécanismes (16) disposés à une distance donnée l'un de l'autre et s'étendant parallèlement l'un à l'autre, lesquels appuient ensemble sur ledit au moins un mors de serrage (18) qui peut être disposé sur ledit au moins un levier de serrage (23) du mécanisme à levier (16) de préférence de manière interchangeable au moyen d'un assemblage par serrage, à déclic, à encliquetage ou par blocage.

3. Module de serrage selon la revendication 1, **caractérisé en ce que** l'articulation à corps solide (27) peut être disposée en une seule pièce sur un levier de serrage (23) du mécanisme (16).

4. Module de serrage selon l'une quelconque des revendications précédentes, **caractérisé en ce qu'**un élément de rappel appuie sur le mécanisme (16) et/ou sur l'élément générateur de parcours (14) et, lorsque l'élément générateur de parcours (14) est dans un état non activé, fait revenir ledit au moins un mécanisme (16) dans une position initiale et fait passer le mors de serrage (18) dans une position initiale.

5. Module de serrage selon l'une quelconque des revendications précédentes, **caractérisé en ce que** le carter (12) présente une partie de paroi droite et une partie de paroi gauche dans lesquelles est respectivement prévue une ouverture de positionnement (31) destinée à assembler par emboîtement le carter (12) sur une barre de serrage (46) d'un dispositif de serrage (45), les ouvertures de positionnement (31) étant en ligne et ledit au moins un mécanisme à levier (16) étant guidé au moins le long d'une face extérieure de l'ouverture de positionnement (31).

6. Dispositif de serrage destiné à serrer au moins un élément de construction (51) pour une opération de soudage qui suit, pourvu d'au moins un module de serrage (11) selon l'une quelconque des revendications 1 à 5 et d'au moins un module de positionnement (81) pour le dispositif de serrage (45) qui est pourvu d'un carter (84) et qui présente un élément générateur de parcours (14) et un mécanisme d'entraînement (87), un élément d'alignement (94) pouvant être activé grâce au mécanisme d'entraînement (87) et pouvant passer, grâce à un mouvement combiné de glissement et de pivotement, d'une position initiale (82) à une position d'alignement (83), un mandrin porte-pièce (48) et au moins deux mors de serrage (46) pouvant être disposés en porte-à faux sur une plaque de base (47), dispositif dans lequel
- lesdits au moins deux mors de serrage (46) et le mandrin porte-pièce (48) peuvent être positionnés sur la plaque de base (47) selon une disposition en triangle,
- au moins un module de serrage (11) peut être disposé sur chaque barre de serrage (46), et
- ledit au moins un mors de serrage (18) du module de serrage (11) disposé sur la barre de serrage (46) est affecté au mandrin porte-pièce (48) en vue de fixer l'élément de construction (51) par rapport au mandrin porte-pièce (48).

7. Dispositif de serrage selon la revendication 6, **caractérisé en ce que** les modules de serrage (11) sont disposés sur la barre de serrage (46) en image en miroir par rapport au mandrin porte-pièce (48), et **en ce que** de préférence les mors de serrage (18) qui se font face fixent, en formant un interstice donné (54), les éléments de construction (51) qui se font face contre le mandrin porte-pièce (48) de manière à créer un point d'assemblage.

8. Dispositif de serrage selon la revendication 6 ou 7, **caractérisé en ce qu'**un ou plusieurs modules de serrage (11) sont reçus de manière à pouvoir être disposés sur la même barre de serrage (46) et à pouvoir glisser le long de ladite barre de serrage (46), et **en ce que** de préférence le carter (12) du module de serrage (11) peut être assemblé par conjugaison de forme et/ou par conjugaison de force à la barre de serrage (46).

9. Dispositif de serrage selon l'une quelconque des revendications 6 à 8, **caractérisé en ce que** la barre de serrage (46) présente une géométrie de section transversale qui forme avec une ouverture de positionnement (31) complémentaire à sa circonférence extérieure et ménagée dans le carter (12) du module de serrage (11) une réception qui empêche le module de serrage (11) de tourner par rapport à la barre de serrage (46).

10. Dispositif de serrage selon l'une quelconque des revendications 6 à 9, **caractérisé en ce que** le mandrin porte-pièce (48) et/ou ladite au moins une barre de serrage (46) est reçu(e) ou sont reçus de manière à pouvoir se déplacer le long du plan de la plaque de base (47), et/ou **en ce que** ladite au moins une barre de serrage (46) et/ou le mandrin porte-pièce (48) peut être fixé(e) ou peuvent être fixés sur la plaque de fond (47) grâce à un dispositif de centrage (53) et que de préférence ledit dispositif de centrage (53) présente des blocs de centrage (57) qui font passer les couples de flexion de la barre de serrage (46) dans la plaque de base (47).

11. Dispositif de serrage selon l'une quelconque des revendications 6 à 10, **caractérisé en ce que** sur la barre de serrage (48) peut être disposé ledit au moins un module de positionnement (81) qui peut être déplacé le long de l'axe longitudinal de la barre de serrage (48), et/ou **en ce que** sur la barre de serrage (46) ou le mandrin porte-pièce (48) peut être disposé un élément de butée (98) qui peut être déplacé le long de l'axe longitudinal de la barre de serrage (46) ou du mandrin porte-pièce (48), et/ou **en ce qu'**au moins un élément de serrage auxiliaire (67) peut être fixé de manière amovible sur le mandrin porte-pièce (48) en vue de recevoir au moins un élément de construction (51) présentant au moins un bord plié ou replié (66).

12. Dispositif de serrage selon l'une quelconque des revendications 6 à 11, **caractérisé en ce que** le mandrin porte-pièce (48) affecté à une arête à souder d'au moins un élément de construction (51) comprend au moins un canal destiné à amener un gaz de soudage et/ou un fluide de refroidissement.
